Europäisches Patentamt

(19) European Patent Office

Office européen des brevets

(11) **EP 0 907 075 A1**

(12) **EUROPEAN PATENT APPLICATION**

(43) Date of publication:
**07.04.1999 Bulletin 1999/14**

(51) Int. Cl.[6]: **G01N 25/68**

(21) Application number: **97402329.3**

(22) Date of filing: **03.10.1997**

(84) Designated Contracting States:
**AT BE CH DE DK ES FI FR GB GR IE IT LI LU MC NL PT SE**

(71) Applicant: **IMRA EUROPE S.A.**
**F-06560 Valbonne (FR)**

(72) Inventors:
• **Ancey, Pascal**
  **06130 Grasse (FR)**
• **Ishihara, Kunio**
  **06600 Antibes (FR)**
• **Fontaine, Jean-Pierre**
  **06600 Antibes (FR)**

• **Gschwind, Michel**
  **06130 Plascassier (FR)**

(74) Representative:
  **Leszczynski, André**
  **NONY & ASSOCIES**
  **29, rue Cambacérès**
  **75008 Paris (FR)**

Remarks:
  A request for correction of text page 6 and fig. 4......
  has been filed pursuant to Rule 88 EPC. A decision
  on the request will be taken during the proceedings
  before the Examining Division (Guidelines for
  Examination in the EPO, A-V, 3.).

(54) **A method of evaluating the risk of humid air condensing on a surface**

(57)     The invention concerns a method and an apparatus for evaluating the risk of condensation on a surface in contact with a volume of humid air, by using a sensor including a detection zone that is brought to the temperature of the surface and that is subjected to temperature cycles about the surface temperature. The method consists in performing the following steps:

a) selecting an initial temperature amplitude;
b) subjecting the detection zone to a temperature cycle of temperature amplitude equal to the selected temperature amplitude;
c) if condensation is detected on the detection zone, selecting a smaller temperature amplitude and returning to b);
d) if no condensation is detected and no condensation was detected with the previously-selected temperature amplitude, selecting a greater temperature amplitude and returning to b); and
e) if no condensation is detected but condensation was detected with the previously-selected temperature amplitude, indicating a corresponding level of risk.

FIG.1

## Description

The present invention relates to a method of evaluating the risk of condensation appearing on a surface in contact with a volume of humid air, the method using a sensor including a detection zone which is brought to the temperature of the surface and which is subjected to temperature cycling about the temperature of the surface.

In the French patent application published under the number 2 702 049, the Applicant company has already described a method of detecting the existence of a risk of condensation on a surface in contact with a volume of humid air.

Such a method, which is sometimes called mist detection, is particularly useful in detecting a risk that condensation will form on the windscreen of a motor vehicle.

That method consists in using a sensor having a detection zone which is brought to the temperature of the surface and in subjecting said detection zone to temperature oscillations about the temperature of the surface.

Although that method operates in satisfactory manner and provides predictions that are reliable, in the event of detecting that there exists a risk of condensation, it is incapable of quantifying the risk.

In other words, although the known method can announce that there is a risk of condensation, it does not indicate how imminent the expected condensation might be. As a result, the measures taken to avoid condensation forming can be insufficient, or on the contrary, they can be excessive.

In an attempt to solve that problem, proposals have already been made for methods and apparatuses which seek to measure the dew point of the water contained in the volume of air, in order to compare the temperature of the surface with the temperature of the dew point and thus evaluate the length of time between the instant a risk is detected and the predicted instant of condensation.

Nevertheless, those methods and apparatuses do not give satisfaction because in addition to being relatively expensive to manufacture, they do not provide a reliable value for the dew point.

The present invention seeks to solve the above-mentioned problem in a manner that is novel and unexpected, by proposing a method and apparatus which not only provide warning of a risk of condensation, but which also indicate the level of the risk.

The method and the apparatus of the invention thus make it possible to take appropriate measures in good time to prevent the anticipated condensation occurring.

It is thus possible to implement the method of the invention to decide when to switch on a heater or a fan, or indeed an air conditioner.

The method and the apparatus of the invention are applicable to the motor industry, although they are not limited in any way to that particular field.

The present invention provides a method of evaluating the risk of condensation on a surface in contact with a volume of humid air, by using a sensor including a detection zone that is brought to the temperature of the surface and that is subjected to temperature cycles about the surface temperature, the method being characterized by the fact that it consists in performing the following steps:

a) selecting an initial temperature amplitude;
b) subjecting the detection zone to a temperature cycle of temperature amplitude equal to the selected temperature amplitude;
c) if condensation is detected on the detection zone, selecting a smaller temperature amplitude and returning to b);
d) if no condensation is detected and no condensation was detected with the previously-selected temperature amplitude, selecting a greater temperature amplitude and returning to b); and
e) if no condensation is detected but condensation was detected with the previously-selected temperature amplitude, indicating a corresponding level of risk.

The originality of the method of the invention lies in the fact that, unlike known methods, it does not seek to determine the humidity of the volume of air or the dew point of the water contained in said volume of air, but instead it modifies the conditions under which condensation detection is implemented and deduces therefrom the level of a risk of condensation.

The method is particularly suitable for implementation with a Peltier effect module, since such a module can be subjected to temperature oscillations that are easily monitored by measuring the Seebeck voltage across its terminals.

In a particular implementation, the method always begins again at step b) even after indicating a condensation risk, such that the risk of condensation is evaluated continuously.

In a variant of that implementation, the level of the risk corresponding to the selected temperature amplitude is indicated continuously, regardless of whether condensation has been detected. In which case, the indicated risk level varies continuously and converges on the real level of the risk, which is reached when the indicated risk level ceases to vary.

The present invention also provides apparatus for implementing the above-described method, said apparatus being characterized by the fact that it includes a Peltier effect module connected to a current generator, a potentiometer connected to the terminals of the Peltier effect module, a clock, and an electronic control circuit which, as a function of voltages supplied by the potentiometer and of times measured by the clock, modifies the current flowing through the Peltier effect module while performing the steps of the above-described method.

Other advantages and characteristics of the invention which form the subject matter of dependent claims appear on reading the following description of an example for making the invention better understood without limiting it in any way.

The description is made with reference to the accompanying drawings, in which:

- Figure 1 is a block diagram of apparatus for implementing the method of evaluating the risk of condensation;
- Figure 2 is a flow chart of the stages in the method;
- Figure 3 is made up of tables of parameters and variables used by the Figure 1 apparatus to implement the method;
- Figure 4 is a table of various states that can be taken up by the apparatus of Figure 1;
- Figure 5 is a more detailed flow chart of the steps in the method described;
- Figures 6a and 6b are waveform diagrams showing how the voltage and the current of the Peltier effect module vary during the first initialization stage; and
- Figures 7a and 7b are waveform diagrams showing how the voltage and the current of the Peltier effect module vary during one complete temperature cycle.

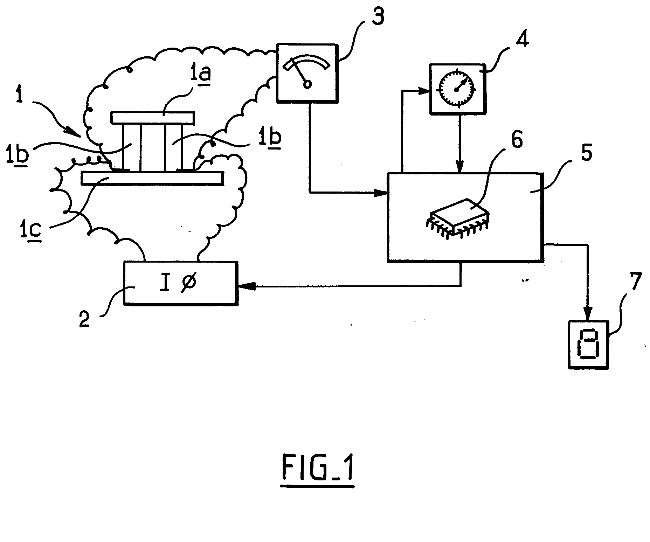

The apparatus of Figure 1 comprises a Peltier effect module 1, a current generator 2, a potentiometer 3, a clock 4, and an electronic control circuit 5 built around a microprocessor 6 and a display 7.

The Peltier effect module 1 includes a detection zone 1a interconnecting the top ends of two thermoelectric elements 1b mounted on a support 1c. The support 1c is intended to take the temperature Ts of the surface (not shown) on which it is desired to evaluate the risk of condensation. The detection zone 1a provides a junction with each of the thermoelectric elements, such that when a current flows through the two thermoelectric elements via the detection zone, the detection zone heats up or cools down depending on the direction of current flow.

The current generator 2 feeds the Peltier effect module under the control of the electronic circuit 5.

The potentiometer 3 measures the voltage across the terminals of the module 1 and sends the measured value to the circuit 5.

The clock 4 measures durations which it sends to the circuit 5, thereby causing the clock to be reset to zero.

The display 7 which indicates the level of a risk of condensation as delivered by the circuit 5 may be replaced by or associated with apparatus which receives the information concerning risk level and which decides on the measures to be taken to prevent the predicted condensation from taking place.

The microprocessor 6 makes use of the data received by the circuit 5 and it generates the data which the circuit 5 is to send to the current generator 2, to the clock 4, and to the display 7 to implement the method described below.

The method is of the type in which the level of the risk corresponding to the selected temperature amplitude is given continuously, and it loops continuously by returning to step b).

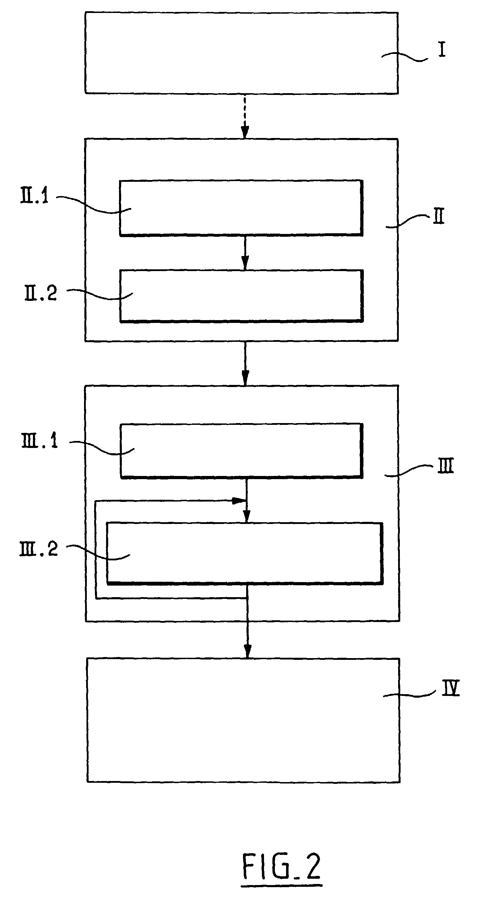

The method comprises four stages I, II, III, and IV which are shown in Figure 2.

The first stage I is a parameter-setting stage which depends on the application in which the method is implemented.

During this stage, an initial amplitude for temperature oscillations in the detection zone is set between maximum and minimum temperatures by predetermining a first heating duration th0_n based on the initial temperature of the surface, and a cooling duration tc_n based on the maximum temperature.

The second stage II is an initialization stage during which the initial state of the module and its operating conditions are evaluated (part II.1) and first calibration is performed (part II.2).

The various states of the module which are detected are the possible presence of water on the detection surface, which means that condensation has already taken place, or an electrical connection problem.

If no problem is detected, calibration consists in measuring the voltage Vt0 across the terminals of the module after first heating for the first predetermined heating duration th0_n.

This calibration thus makes it possible to redefine the amplitude of the temperature oscillations with a voltage threshold for heating.

The third stage III is a stage during which condensation risk determination proper is performed.

This third stage begins by cycle stabilization (part III.1) for the purpose of bringing the module into steady state conditions in which the temperature of the detection zone oscillates with fixed amplitude and in stable manner, i.e. about a stabilized mean temperature for the module, whereas said temperature increases during all of the first thermal cycles.

During each cycle, heating is maintained until the voltage across the terminals of the module reaches the voltage threshold Vt0, and cooling is performed during the specified cooling duration tc_n.

Once steady state conditions have been achieved, the module is ready to provide reliable measurements during a detection step (part III.2) which consists in comparing the measured heating duration between the minimum temperature and the maximum temperature of the detection surface with an ideal dry heating duration.

In practice, the dry heating duration is set to be proportional to the first heating duration th_0n as set during the initialization stage I.

Several situations can then arise.

1) If the measured heating duration is greater than the ideal duration, condensation has been detected.

The following step then consists in reducing the temperature amplitude and in returning to the calibration step of the initialization stage II to determine a new voltage threshold for heating.

2) If the measured heating duration is substantially the same as the ideal duration, then no condensation has been detected, in which case two situations are possible:

2a) No condensation was detected with the previously-selected amplitude of temperature oscillation, in which case the temperature amplitude is increased and the method returns to initialization stage II.

2b) Condensation is no longer detected whereas condensation was detected with the previously-selected temperature amplitude. This means that limiting conditions for condensation lie between the present temperature amplitude and the previously selected temperature amplitude. A value for the risk of condensation is deduced therefrom.

The fourth stage IV is a backup stage during which the most recently performed measurements are saved before switching off the apparatus.

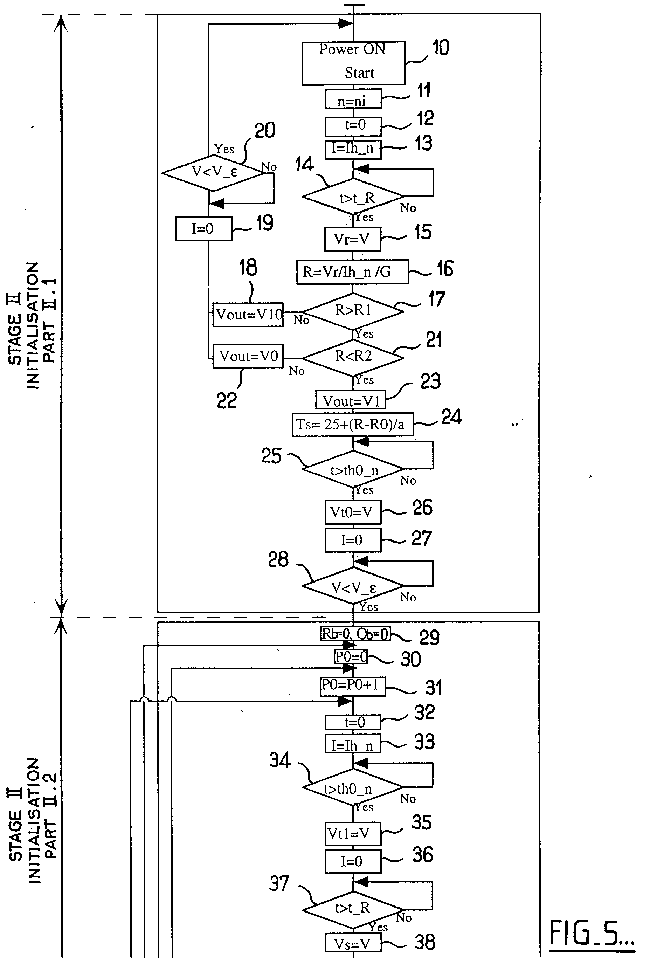

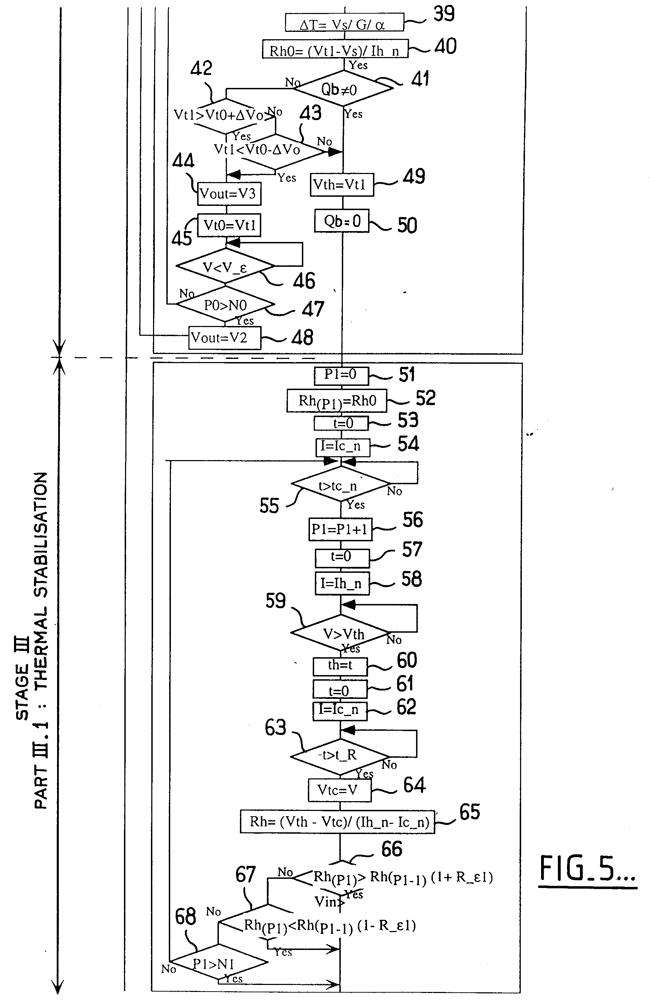

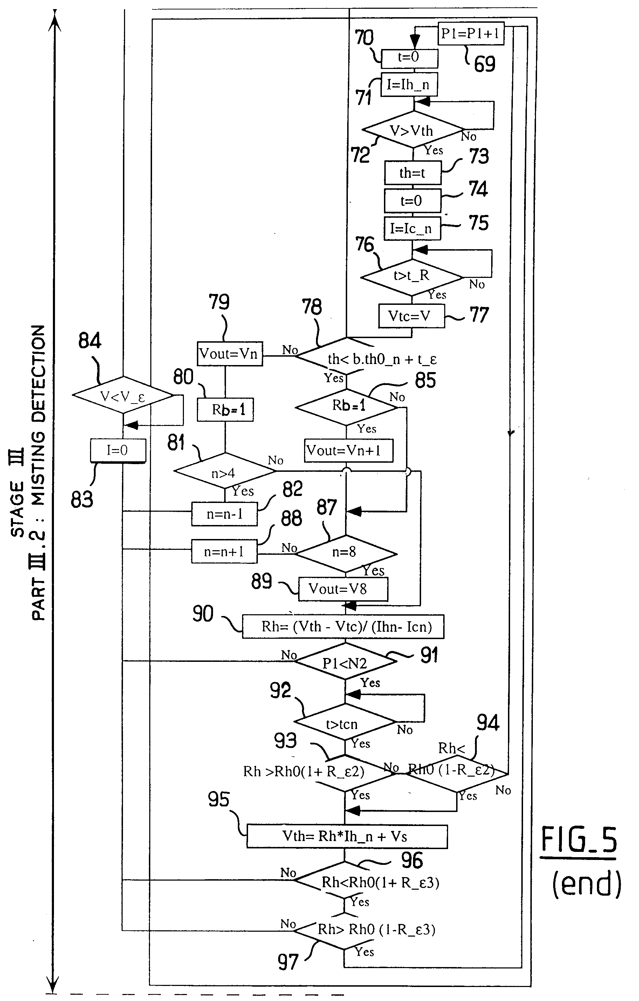

The various steps performed by the apparatus of Figure 1 during stages II and III are described below with reference to Figure 5.

Steps numbered 10 to 28 belong to the first part II.1 of stage II.

Steps numbered 29 to 50 belong to the second part II.2 of stage III.

Steps numbered 51 to 68 belong to the first part III.1 of stage III.

Steps numbered 69 to 97 belong to the second part III.2 of stage III.

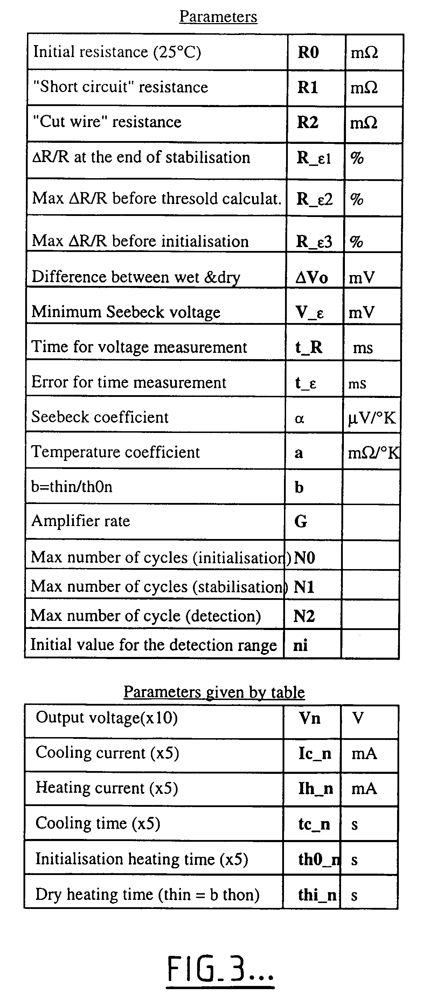

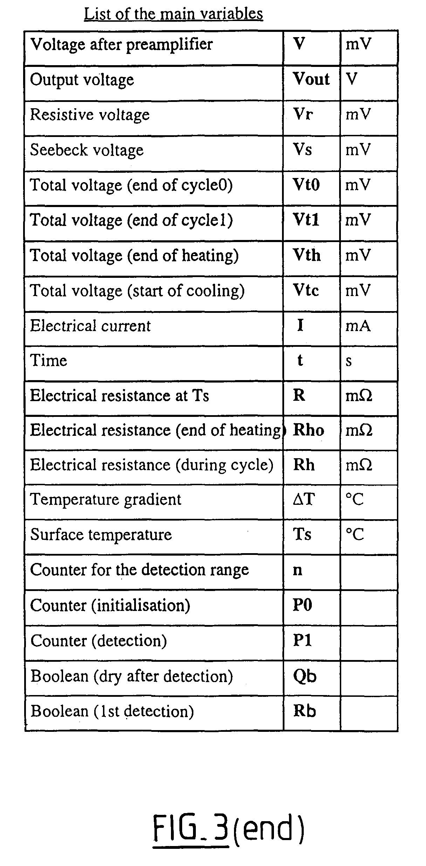

The apparatus of Figure 1 uses the parameters and variables listed in Figure 3.

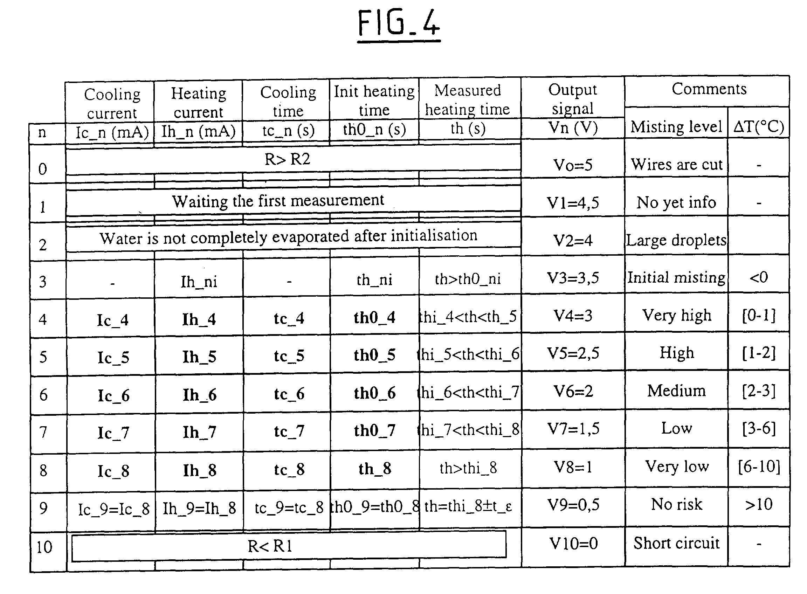

Some of these parameters and variables are provided by the table of Figure 4 which has ten entries identified by an index n. Only entries 4 to 8 correspond to risk levels, the other entries correspond to intermediate states or to anomalies.

It can be seen that each index n corresponds to a cooling current $Ic\_n$, to a heating current $Ih\_n$, to a cooling time $tc\_n$, to a first heating time $th0\_n$, and to an output voltage $Vn$.

The first five parameters are determined so that the heating and cooling energies are equal, such that ignoring the Joule effect, the module 1 does not accumulate heat due to the temperature oscillations of the detection zone 1a, and so as to maximize detection sensitivity.

The output voltage $Vn$ is transferred by the circuit 5 to the variable $Vout$, for the display 7 or for the downstream apparatus, and constitutes the result of implementing the method. In general, $Vn$ represents a risk level, but it can also indicate an intermediate state or an anomaly, as is explained below.

The display 7 or the downstream apparatus therefore generally associates each value $Vn$ with an interpretation in terms of condensation risk. Naturally, this interpretation can vary as a function of the temperature of the surface. For example, a low risk at 30°C can become a medium risk at 15°C. In the table of Figure 4, these variations of interpretation can give rise to the $Vn$ column being shifted vertically relative to the risk level column.

This amounts to varying the correspondence between temperature amplitude and risk level as a function of surface temperature.

Surface temperature can also have an influence on the mean temperature of the Peltier effect module 1, and thus on its Seebeck voltage, thereby modifying the selected temperature amplitudes since the heating stages thereof are determined by a voltage threshold across the terminals of the module.

To compensate for this influence, it is possible in this case also to shift column $Vn$ and column risk level in the table, or else to modify the values of $Vn$.

Each of the steps is described in succession below.

INITIALIZATION STAGE II

Part II.1 - Evaluating the initial state of the module and its operating conditions

Step 10: the Figure 1 apparatus is switched on. Each of its component elements is fed with electricity.

Step 11: an index $ni$ is selected corresponding to an initial temperature amplitude.

This index is set during the parameter-setting stage I as a function of the described reaction.

For example, in order to obtain an accurate evaluation of the risk of condensation quickly, a medium initial temperature amplitude is selected, so index $ni = 6$.

In contrast, in order to eliminate any risk of condensation as quickly as possible, a small temperature amplitude is selected, so index $ni = 4$, which corresponds to a high risk level, so that the display 7 or the downstream apparatus which makes use of the risk level initially assumes that the risk level is high and responds accordingly.

Step 12: the clock is reset.

Step 13: the electronic circuit 5 controls the current generator 2 causing it to apply heating current to the Peltier effect module 1 at a value Ih_n taken from the table of Figure 4 as a function of the index n.

Cycle 0 begins as shown in Figure 6a.

Step 14: a waiting loop having a very short period (about 500 µs) to allow a voltage to become established across the terminals of the Peltier effect module.

Step 15: the voltage across the terminals of the Peltier effect module is measured, which module is at the temperature of the surface since the detection zone 1a has not yet had time to change temperature.

The measured voltage Vr is thus due solely to the resistance of the module at the temperature Ts of the surface.

Step 16: the resistance R of the module at the temperature Ts of the surface is calculated, where G is the gain of an amplifier in the circuit 5.

Step 17: the resistance R of the module while at the temperature of the surface is compared with a minimum resistance R1 below which the module is considered as being in a short circuit state.

Step 18: if R is less than or equal to R1, then the output voltage Vout is set to the value V10 indicating a short circuit and the method returns to step 10 after resetting the current I to zero (step 19) and after waiting for the voltage across the terminals of the module to become less than a minimum Seebeck voltage $V_\varepsilon$ which corresponds to a temperature difference of about 0.1°C between the detection zone 1a and the support 1c (step 20). Step 21: in the absence of a short circuit, i.e. if R is greater than R1, the resistance R of the module is compared with a maximum resistance R2 above which the module is considered as being open circuit, which means that a wire has broken.

Step 22: if R is greater than or equal to R2, Vout is set to the value V0 indicating that a wire has broken and the method returns to step 10 after resetting the current I to zero and waiting for V to become less than $V_\varepsilon$ in steps 19 and 20.

Step 23: if the initial resistance of the module is plausible, i.e. if it lies between R1 and R2, Vout is set to the value V1 meaning that no information about the risk of condensation is presently available.

Step 24: the temperature Ts of the surface is calculated from the resistance R (itself calculated in step 16) of the module when it is at the temperature of the surface, this calculation relying on the resistance R0 of the module at 25°C, which is known, and the relationship which exists between the resistance of the module and its temperature.

In this case, the value Ts is provided by way of information, but it is not used later on in the method.

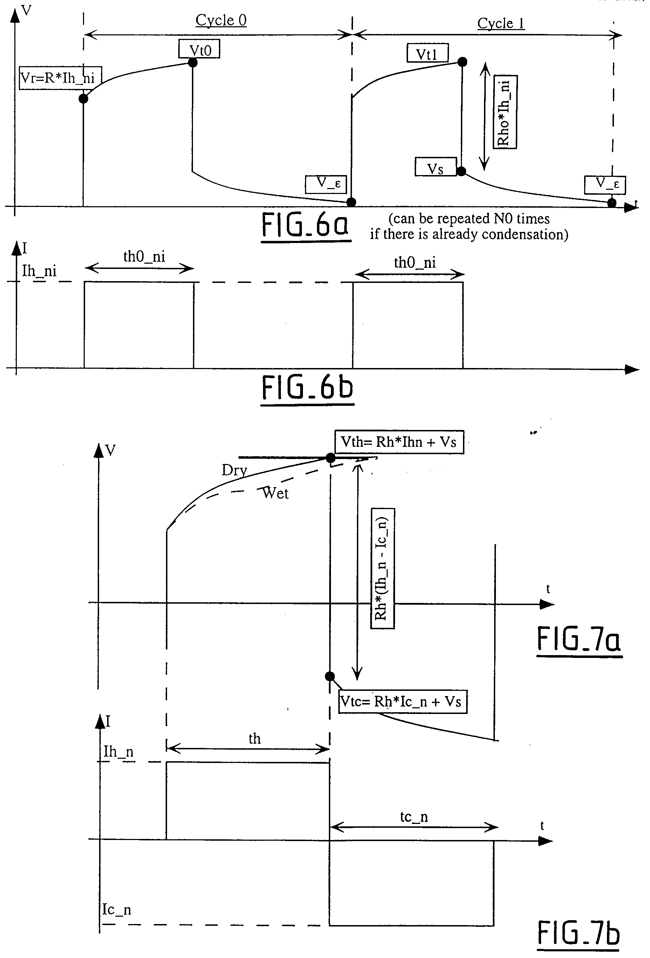

Step 25: a waiting loop to terminate the first heating of duration th0_n as selected in step 11 by fixing the index n, as shown in Fig 6b.

Step 26: the voltage Vt0 across the terminals of the module is measured at the end of the first heating (see Figure 6a).

Step 27: current feed to the module 1 is switched off.

The voltage across the terminals of the module is then due only to the Seebeck effect resulting from the temperature difference between the support 1c which is substantially at the temperature of the surface, and the temperature of the detection zone 1a which has just been heated.

Step 28: a waiting loop until the voltage across the terminals of the module becomes less than a minimum Seebeck voltage $V_\varepsilon$ which corresponds to a temperature difference of about 0.1°C between the detection zone 1a and the support 1c (see Figure 6a).

In other words, on leaving step 28, the module has returned to a uniform temperature.

During this first part II.1, it has thus been verified that the module is in good condition for electrical operation and the voltage Vt0 across the terminals of the module at the end of the first heating has been stored, i.e. the voltage at the moment when the detection zone 1a reached the maximum temperature of the selected temperature amplitude.

Part II.2 - Determining the voltage threshold at the end of dry heating

Given that the sensor was not necessarily dry during the first heating performed in part II.1, the purpose of part II.2 is to dry the detection zone, should that be necessary, and to determine the voltage across the terminals of the Peltier effect module at the end of heating while dry.

To this end, the module is subjected to a plurality of successive heating pulses until the voltage measured across the terminals of said module at the end of each heating pulse is always the same.

It is known that if the detection zone is wet, each heating pulse gives rise to evaporation which reduces the quantity of water present on the detection zone, which means that on each occasion a heating pulse reaches a temperature that is higher than on the previous occasion.

The Seebeck component of the voltage across the terminals of the module at the end of each heating pulse thus increases, thereby causing the end-of-heating voltage to increase likewise, so long as the detection zone is wet. By measuring this voltage during the various successive heating pulses, it is possible to determine whether the detection zone is wet (increasing voltage) or dry (constant voltage).

At step 29, two Boolean variables $R_b$ and $Q_b$ are set to "false" indicating respectively whether a first detection has taken place and whether, after detection, the detection zone is dry.

Step 30: a heating pulse counter P0 is reset to zero.
Step 31: the counter P0 is incremented.
Step 32: the clock is reset to zero.
Step 33: the module is fed with heating current Ih_n.
Step 34: a waiting loop for the duration of the first heating pulse th0_n.
Step 35: the voltage Vt1 across the terminals of the module is measured at the end of the heating pulse, as shown in Figure 6a.
Step 36: the current feed to the module is switched off.
Step 37: a waiting loop for a very short time interval (about 500 μs) to allow the resistive component of the voltage to disappear while the module remains under end-of-heating temperature conditions.
Step 38: the voltage Vs across the terminals of the module is measured, with this voltage being due to the Seebeck effect (see Figure 6a).
Step 39: the temperature increase during heating is calculated, where $\alpha$ is the Seebeck coefficient of the module.

This increase in temperature is given for information purposes only, but it is not used later on in the method.
Step 40: the resistance Rh0 of the module at the end of heating is calculated so as to make it possible to observe any possible change in its mean temperature.

This value Rh0 is used later on to monitor temperature drift of the module.
Step 41: the Boolean variable $Q_b$ is tested to discover whether it has already been determined that the detection zone is dry.

In that case, jump to step 49 described hereafter.
Steps 42 and 43: if the above test gives a negative response, i.e. if it has not yet been determined that the detection zone is dry, a test is performed on the difference between the voltage Vt1 measured at the end-of-heating step 38 and the voltage Vt0 measured at step 26 during first heating.

If the difference between those two voltages is less than a value ΔV0 corresponding to a known voltage difference between the dry and wet states of the detection zone, it is deduced that the first heating pulse took place under dry conditions and the following steps are performed.
Step 49: the end-of-heating voltage threshold Vth for the forthcoming cycles is set to the value Vt1.
Step 50: the Boolean variable $Q_b$ is set to the value "true".

Stage II.2 is then over.

However, if the difference between the voltages Vt1 and Vt0 is greater than or equal to ΔV0, it is deduced that the detection zone was wet, at least during the first heating pulse, and the following steps are performed.
Step 44: the output voltage Vout is set to a value V3 indicating that the detection zone is wet.
Step 45: the variable Vt0 is set to the value Vt1 for the next comparison between two successive heating pulses.
Step 46: a waiting loop until the detection zone 1a and the support 1c are substantially at the same temperature (see Figure 6a).
Step 47: the value of the heating pulse counter P0 is compared with a maximum number of heating pulses N0.

Providing this maximum number has not been reached, the method loops back to step 31 to perform another heating pulse and another comparison between Vt1 and Vt0.
Step 48: if the maximum number of heating pulses N0 has been reached, the output voltage Vout is set to a value V2 indicating that the detection zone is still wet in spite of N0 successive heating pulses, and the method loops back to step 30 to perform another N0 heating pulses.

STAGE III FOR DETERMINING RISK

Part III.1 - Temperature stabilization

On entering stage III, the detection zone 1a is dry and the voltage Vth at the end of heating is known.

The apparatus enters the thermal cycle (shown in Figures 7a and 7b) in the middle thereof.

Step 51: a cycle counter P1 is reset to zero.
Step 52: the resistance of the module at the end of the preceding heating pulse is stored in order to monitor any possible rise in the mean temperature thereof.
Step 53: the clock is reset to zero.
Step 54: a cooling current Ic_n is applied to the Peltier effect module.
Step 55: a waiting loop for a duration tc_n which is the cooling duration fixed by the selected temperature amplitude.
Step 56: the cycle counter P1 is incremented.
Step 57: the clock is reset to zero.
Step 58: a heating current Ih_n is sent to the Peltier effect module.

At this point, the detection zone 1a is not at the surface temperature Ts as it was during previous heating pulses, but at its minimum temperature as fixed by the selected temperature amplitude.
Step 59: a waiting loop until the voltage across the terminals of the module reaches the threshold value Vth.

Step 60: the duration th during which it was necessary to heat the detection zone 1a to cause it to go from its minimum temperature to the maximum temperature set by the selected amplitude is stored.

Step 61: the clock is reset to zero.

Step 62: the module is fed with the cooling current Ic_n.

Step 63: a waiting loop for a very short duration t_r (about 500 µs) to allow the voltage across the terminals of the module to take account of the change of current flow direction without its Seebeck component varying significantly.

Step 64: the voltage Vtc across the terminals of the module is measured at the beginning of cooling, i.e. with the resistive component due to the cooling current and with the Seebeck component due to the heating, given that the detection zone 1a has not yet had enough time to change temperature.

Step 65: the resistance of the module at the beginning of cooling is calculated, i.e. under end-of-heating conditions.

Steps 66 and 67: the resistance as measured is compared with the resistance stored at step 52.

If the difference between these two resistances is less than a predetermined percentage $R_{\varepsilon}1$, the module is considered as not drifting in temperature and the method moves on to detection part III.2.

Step 68: in contrast, if the resistance of the module has varied by more than $R_{\varepsilon}1\%$, the cycle counter P1 is compared with a maximum value N1.

Providing the value N1 has not been reached, a heating and cooling cycle is performed again, starting from step 55.

Otherwise, the mean temperature of the module is still unstabilized after N1 cycles, but the method passes nevertheless on to part III.2 for detecting condensation.

Part III.2 - Detecting condensation

This stage is entered at step 78.

The module is then still being fed with the cooling current Ic_n.

Step 78: the heating time th as measured at step 60 is compared with an ideal dry heating time thi_n plus a margin of tolerance $t_{\varepsilon}$ to accommodate possible measurement errors.

Empirically, it has been determined that the ideal dry heating time thi_n is proportional to the first heating time th0_n.

If th is greater than thi_n, even after making allowance for possible measurement error, that means that condensation took place during the cooling pulse preceding the most recent heating pulse. Under such circumstances, the following steps are performed.

Step 79: the output voltage Vout is set to the value Vn corresponding to the present temperature amplitude.

Step 80: the Boolean variable $R_b$ is set to "true" indicating that a first detection has taken place.

Step 81: the index $\underline{n}$ is compared with the value 4 which, in the example described, corresponds to the minimum temperature amplitude.

Step 82: if $\underline{n}$ is greater than 4, $\underline{n}$ is decremented.

Step 83: the current feed to the module is switched off.

Step 84: a waiting loop until the Seebeck voltage across the terminals of the module is less than the minimum voltage $V_{\varepsilon}$ which corresponds to a temperature difference of about 0.1°C between the detection zone 1a and the support 1c.

The method returns to step 32 to perform part II.2 again in order to fix a new end-of-heating voltage threshold Vth corresponding to the new selected temperature amplitude.

If $\underline{n}$ is equal to 4, the method moves onto step 90 which is described further on.

If at step 78, th is equal to thi_n, after making allowance for measurement errors, that means that no condensation has taken place during the cycle. The method moves onto step 85.

Step 85: the Boolean variable $R_b$ that indicates whether detection has already taken place is tested.

If so, i.e. if $R_b$ is true, that means that condensation was detected with the previously selected temperature amplitude but that condensation is no longer detected with the present temperature amplitude.

Under such circumstances, in step 86, the output voltage Vout is set to the value Vn+1 which is representative of the level of risk corresponding to the previously selected temperature amplitude.

Otherwise, if there has not yet been any detection, the value of Vout remains unchanged.

Step 87: the index $\underline{n}$ is compared with the value 8 which, in the example described, corresponds to the maximum temperature amplitude.

If $\underline{n}$ is less than 8, then $\underline{n}$ is incremented in step 88 and the method continues with above-described step 83.

If $\underline{n}$ is equal to 8, then in step 89, the output voltage Vout is set to a value V8 indicating that the risk of condensation is very low.

If $\underline{n}$ is equal to 4 or to 8, corresponding to a risk that is very high or that is very low, then steps 90 et seq. are performed in order to determine whether the module has retained its mean temperature or whether its temperature has drifted.

In step 90, the preceding end-of-heating resistance of the module is calculated.

In step 91, the counter P1 is compared with a maximum number N2 of detection cycles, and the method loops back to step 83 if P1=N2 , so as to return to step 32.

Step 92: a waiting loop to end cooling.

Steps 93 and 94: the previous end-of-heating resistance of the module is compared with its initial resistance Rh0 as determined in step 40 during the initialization stage.

If the difference between these two measured resistances is less than a predetermined percentage R_ε2, that means that the temperature drift of the module is acceptable and the method returns to step 69 to subject the module to a new heating and cooling cycle during which the heating time th is measured again (step 73) and the voltage at the beginning of cooling is measured again (step 77) before performing again condensation-detection steps 78 to 89.

If in steps 93 and 94 it is determined that the resistance of the module has drifted by a percentage greater than R_ε2, then the voltage Vth is recalculated in step 95 to take account of the new mean end-of-heating temperature of the module as expressed by its resistance Rh.

In steps 96 and 97, Rh is again compared with the initial resistance Rh0 of the module.

If the change is greater than a percentage R_ε3, itself greater than R_ε2, then the calculation of step 95 is insufficient since the temperature drift of the module is such that the Seebeck voltage Vs stored in step 32 during the initialization stage has itself varied significantly.

It is therefore necessary to measure Vth again by performing stage II.2 again starting from step 32, after switching off the current (step 83) and waiting for the module temperature to become uniform (step 84).

Another possibility would be to recalculate the Seebeck voltage as a function of the new temperature of the module.

If it is determined in steps 96 and 97 that the variation of Rh is less than the percentage R_ε3 then the method loops back to step 69.

Otherwise, the method loops back to step 83 to perform the initialization stage again.

Naturally, the above-described example is not limiting in any way, and any desirable modification can be made thereto without going beyond the ambit of the invention.

**Claims**

1.  A method of evaluating the risk of condensation on a surface in contact with a volume of humid air, by using a sensor including a detection zone that is brought to the temperature of the surface and that is subjected to temperature cycles about the surface temperature, the method being characterized by the fact that it consists in performing the following steps:

a) selecting an initial temperature amplitude;

b) subjecting the detection zone to a temperature cycle of temperature amplitude equal to the selected temperature amplitude;

c) if condensation is detected on the detection zone, selecting a smaller temperature amplitude and returning to b);

d) if no condensation is detected and no condensation was detected with the previously-selected temperature amplitude, selecting a greater temperature amplitude and returning to b); and

e) if no condensation is detected but condensation was detected with the previously-selected temperature amplitude, indicating a corresponding level of risk.

2.  A method according to claim 1, in which the lower the surface temperature, the smaller the initial temperature amplitude.

3.  A method according to claim 1 or 2, in which the correspondence between temperature amplitude and risk level varies with the temperature of the surface, the lower the air temperature, the greater the risk level indicated in step e).

4.  A method according to any one of claims 1 to 3, in which the detection zone is heated and cooled by at least one Peltier effect module.

5.  A method according to claim 4, in which the temperature amplitude of each cycle is defined by two voltage values corresponding to voltages across the terminals of the Peltier effect modules when the detection zone is at its maximum and minimum temperatures during the cycle.

6.  A method according to claim 4, in which the temperature amplitude of each cycle is defined by a voltage value corresponding to the voltage across the terminals of the Peltier effect modules when the detection zone is at its maximum temperature and by a duration corresponding to the duration during which it is necessary to cool the detection zone in order to cause it to reach its minimum condensation-free temperature.

7.  A method according to any one of claims 1 to 6, in which, before subjecting the detection zone to a temperature cycle, it is heated in order to dry it, and it is then allowed to return to the temperature of the surface.

8.  A method according to claim 5 or 6 and according to claim 7, in which first heating of the detection zone is performed for a predetermined first heating duration, the voltage across the terminals of the Peltier effect element(s) being measured at the end of said first heating and being stored to define the amplitude of the cycle.

9. An apparatus for implementing the method according to claims 1 to 8, characterized by the fact that it includes a Peltier effect module (1) connected to a current generator (2), a potentiometer (3) connected to the terminals of the Peltier effect module, a clock (4), and an electronic control circuit (5) which, as a function of voltages supplied by the potentiometer and of times measured by the clock, modifies the current flowing through the Peltier effect module while performing the steps of said method.

FIG_1

FIG. 2

## Parameters

| | | |
|---|---|---|
| Initial resistance (25°C) | **R0** | mΩ |
| "Short circuit" resistance | **R1** | mΩ |
| "Cut wire" resistance | **R2** | mΩ |
| ΔR/R at the end of stabilisation | $R_{\varepsilon 1}$ | % |
| Max ΔR/R before thresold calculat. | $R_{\varepsilon 2}$ | % |
| Max ΔR/R before initialisation | $R_{\varepsilon 3}$ | % |
| Difference between wet &dry | **ΔVo** | mV |
| Minimum Seebeck voltage | $V_{\varepsilon}$ | mV |
| Time for voltage measurement | **t_R** | ms |
| Error for time measurement | $t_{\varepsilon}$ | ms |
| Seebeck coefficient | $\alpha$ | μV/°K |
| Temperature coefficient | **a** | mΩ/°K |
| b=thin/th0n | **b** | |
| Amplifier rate | **G** | |
| Max number of cycles (initialisation) | **N0** | |
| Max number of cycles (stabilisation) | **N1** | |
| Max number of cycle (detection) | **N2** | |
| Initial value for the detection range | **ni** | |

## Parameters given by table

| | | |
|---|---|---|
| Output voltage(x10) | **Vn** | V |
| Cooling current (x5) | **Ic_n** | mA |
| Heating current (x5) | **Ih_n** | mA |
| Cooling time (x5) | **tc_n** | s |
| Initialisation heating time (x5) | **th0_n** | s |
| Dry heating time (thin = b thon) | **thi_n** | s |

## FIG.3...

List of the main variables

| Voltage after preamplifier | V | mV |
|---|---|---|
| Output voltage | Vout | V |
| Resistive voltage | Vr | mV |
| Seebeck voltage | Vs | mV |
| Total voltage (end of cycle0) | Vt0 | mV |
| Total voltage (end of cycle1) | Vt1 | mV |
| Total voltage (end of heating) | Vth | mV |
| Total voltage (start of cooling) | Vtc | mV |
| Electrical current | I | mA |
| Time | t | s |
| Electrical resistance at Ts | R | mΩ |
| Electrical resistance (end of heating) | Rho | mΩ |
| Electrical resistance (during cycle) | Rh | mΩ |
| Temperature gradient | ΔT | °C |
| Surface temperature | Ts | °C |
| Counter for the detection range | n | |
| Counter (initialisation) | P0 | |
| Counter (detection) | P1 | |
| Boolean (dry after detection) | Qb | |
| Boolean (1st detection) | Rb | |

# FIG. 3(end)

## FIG. 4

| n | Cooling current Ic_n (mA) | Heating current Ih_n (mA) | Cooling time tc_n (s) | Init heating time th0_n (s) | Measured heating time th (s) | Output signal Vn (V) | Comments Misting level | ΔT(°C) |
|---|---|---|---|---|---|---|---|---|
| 0 | R> R2 | | | | | Vo=5 | Wires are cut | - |
| 1 | Waiting the first measurement | | | | | V1=4,5 | No yet info | - |
| 2 | Water is not completely evaporated after initialisation | | | | | V2=4 | Large droplets | |
| 3 | - | Ih_ni | - | th_ni | th>th0_ni | V3=3,5 | Initial misting | <0 |
| 4 | Ic_4 | Ih_4 | tc_4 | th0_4 | thi_4<th<th_5 | V4=3 | Very high | [0-1] |
| 5 | Ic_5 | Ih_5 | tc_5 | th0_5 | thi_5<th<thi_6 | V5=2,5 | High | [1-2] |
| 6 | Ic_6 | Ih_6 | tc_6 | th0_6 | thi_6<th<thi_7 | V6=2 | Medium | [2-3] |
| 7 | Ic_7 | Ih_7 | tc_7 | th0_7 | thi_7<th<thi_8 | V7=1,5 | Low | [3-6] |
| 8 | Ic_8 | Ih_8 | tc_8 | th_8 | th>thi_8 | V8=1 | Very low | [6-10] |
| 9 | Ic_9=Ic_8 | Ih_9=Ih_8 | tc_9=tc_8 | th0_9=th0_8 | th=thi_8±t_ε | V9=0,5 | No risk | >10 |
| 10 | R< R1 | | | | | V10=0 | Short circuit | - |

EP 0 907 075 A1

FIG.5...

$\Delta T = Vs/ G/ \alpha$ — 39

$Rh0 = (Vt1-Vs)/ Ih\_n$ — 40

42    No   Yes   41

$Qb \neq 0$

$Vt1 > Vt0 + \Delta Vo$   No   43

$Vt1 < Vt0 - \Delta Vo$   No

44   Yes   Yes

$Vth = Vt1$ — 49

$Vout = V3$

$Vt0 = Vt1$

$Qb = 0$ — 50

45

$V < V\_\varepsilon$ — 46

$P0 > N0$ — 47

$Vout = V2$ — 48

$P1 = 0$ — 51

$Rh(P1) = Rh0$ — 52

$t = 0$ — 53

$I = Ic\_n$ — 54

$t > tc\_n$   No

55   Yes

$P1 = P1 + 1$ — 56

$t = 0$ — 57

$I = Ih\_n$ — 58

59

$V > Vth$   No

Yes

$th = t$ — 60

$t = 0$ — 61

$I = Ic\_n$ — 62

63

$-t > t\_R$   No

Yes

$Vtc = V$ — 64

$Rh = (Vth - Vtc)/ (Ih\_n - Ic\_n)$ — 65

— 66

67   No   $Rh(P1) > Rh(P1-1) (1 + R\_\varepsilon1)$

$Vin >$   Yes

68   No   $Rh(P1) < Rh(P1-1) (1 - R\_\varepsilon1)$

Yes

$P1 > N1$   No

Yes

**STAGE III**

**PART III.1 : THERMAL STABILISATION**

FIG_5...

STAGE II
PART II.2 : MISTING DETECTION

**70** t=0 ← P1=P1+1 **69**

**71** I=Ih_n

**72** V>Vth — No

Yes

**73** th=t

**74** t=0

**75** I=Ic_n

**76** t>t_R — No

Yes

**77** Vtc=V

**78** th< b.th0_n + t_ε — No → **79** Vout=Vn

Yes

**84** V<V_ε **80** Rb=1

**83** I=0

**85** Rb=1 — No

Yes

Vout=Vn+1

**81** n>4 — No

Yes

**82** n=n-1

**88** n=n+1 — No ← **87** n=8

Yes

**89** Vout=V8

**90** Rh= (Vth - Vtc)/ (Ihn- Icn)

**91** P1<N2 — No

Yes

**92** t>tcn — No

Yes

**93** Rh >Rh0(1+ R_ε2) — No — **94** Rh< Rh0 (1-R_ε2) — No

Yes ......... Yes

**95** Vth= Rh*Ih_n + Vs

**96** Rh<Rh0(1+ R_ε3) — No

Yes

**97** Rh> Rh0 (1-R_ε3) — No

Yes

FIG_5
(end)

$$Vr = R*Ih\_ni$$

$$V\_\varepsilon$$

$$Rho*Ih\_ni$$

$$Vt0 \qquad Vt1$$

$$Vs$$

Cycle 0 — Cycle 1

**FIG.6a** (can be repeated N0 times if there is already condensation)

$$Ih\_ni$$

$$th0\_ni \qquad th0\_ni$$

**FIG.6b**

Dry / Wet

$$Vth = Rh*Ihn + Vs$$

$$Rh*(Ih\_n - Ic\_n)$$

$$Vtc = Rh*Ic\_n + Vs$$

**FIG.7a**

$$Ih\_n$$

$$th$$

$$tc\_n$$

$$Ic\_n$$

**FIG.7b**

18

**European Patent Office**

**EUROPEAN SEARCH REPORT**

Application Number

EP 97 40 2329

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | FR 2 702 049 A (IMRA EUROPE SA)<br>* the whole document * | 1,9 | G01N25/68 |
| A | EP 0 733 898 A (IMRA EUROPE SA)<br>* abstract; figure 2 * | 1 | |
| A | EP 0 232 432 A (ACONVEST AG)<br>* abstract * | 1 | |
| A | EP 0 282 900 A (DRÄGERWERK AG)<br>* abstract * | 1 | |

TECHNICAL FIELDS
SEARCHED (Int.Cl.6)

G01N

The present search report has been drawn up for all claims

| Place of search | Date of completion of the search | Examiner |
|---|---|---|
| THE HAGUE | 10 March 1998 | Duchatellier, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)